# EUROPÄISCHE PATENTSCHRIFT

(11) **EP 1 544 047 B1**
(45) Veröffentlichungstag und Bekanntmachung des Hinweises auf die Patenterteilung: **22.12.2010**
(21) Anmeldenummer: 04025705.7
(22) Anmeldetag: 29.10.2004
(51) Int. Cl.: B60R 19/24, B62D 25/16

(54) **Fahrzeugkarosserie**
Vehicle body
Carrosserie de véhicule

(30) Priorität: 19.12.2003 DE 10359768
(43) Veröffentlichungstag der Anmeldung: 22.06.2005
(73) Patentinhaber: Dr. Ing. h.c. F. Porsche AG, 70435 Stuttgart (DE)
(72) Erfinder: Pfister, Klaus, 75433 Maulbronn (DE); Danev, Dimitar, 71272 Renningen (DE)

(56) Entgegenhaltungen:
- US-A1- 2002 149 221
- US-A1- 2003 015 882
- PATENT ABSTRACTS OF JAPAN Bd. 2003, Nr. 04, 2. April 2003 (2003-04-02) -& JP 2002 362266 A (TOYOTA INDUSTRIES CORP), 18. Dezember 2002 (2002-12-18)
- PATENT ABSTRACTS OF JAPAN Bd. 2000, Nr. 15, 6. April 2001 (2001-04-06) -& JP 2000 335336 A (KANTO AUTO WORKS LTD), 5. Dezember 2000 (2000-12-05)
- PATENT ABSTRACTS OF JAPAN Bd. 2003, Nr. 04, 2. April 2003 (2003-04-02) & JP 2002 370574 A (MITSUBISHI MOTORS CORP), 24. Dezember 2002 (2002-12-24)

## Beschreibung

Die Erfindung betrifft eine Fahrzeugkarosserie mit zumindest einem ersten und einem zweiten, die Karosserieaußenhaut bildenden Aufbauteil gem. dem Oberbegriff des Patentanspruchs 1.

Bei bekannten Anordnungen besteht die Problematik, dass beide angrenzenden Aufbauteile in nicht zugänglichen Bereichen befestigungslos aneinander anliegen. Insbesondere, wenn zumindest eines dieser Aufbauteile als Kunststoffteil ausgebildet ist, kann es zudem vorkommen, dass dieses Aufbauteil infolge starker Temperatureinwirkung seine Lage verändert. Ein außenhautbündiger Übergang und ein gleichmäßiger Fugenverlauf zwischen beiden angrenzenden Aufbauteilen ist somit nicht mehr gegeben, was optisch äußerst störend ist.

Die gattungsgemäße US 2003/0015882 A1 offenbart eine Fahrzeugkarosserie mit zumindest einem ersten und einem zweiten, die Karosserieaußenhaut bildenden Aufbauteil, wobei die Aufbauteile im Bereich von gleichgerichteten Flanschen aneinandergesetzt und lösbar miteinander verbunden sind und zur Fahrzeugaußenseite hin im gemeinsamen Verbindungsbereich eine Fuge begrenzen.

Zwischen beiden angrenzenden Aufbauteilen ist jeweils eine Positioniereinrichtung vorgesehen, die beide Aufbauteile in X- und Y-Richtung zueinander festlegt, wobei jede Positioniereinrichtung ein an einem Aufbauteil z.B. befestigtes, vormontiertes Stützteil mit einem angeformten vorstehenden Fixierabschnitt umfasst, der mit einer am Flansch des anderen Bauteils angeordneten Ausnehmung formschlüssig zusammenwirkt.

Aufgabe der Erfindung ist es, in nicht zugänglichen befestigungslosen Bereichen von zwei angrenzenden, die Karosserieaußenhaut bildenden Aufbauteilen solche Vorkehrungen zu treffen, dass stets ein außenhautbündiger Übergang und ein gleichmäßiger Fugenverlauf zwischen den beiden angrenzenden Aufbauteilen gegeben ist.

Erfindungsgemäß wird diese Aufgabe durch die Merkmale des Anspruchs 1 gelöst. Weitere die Erfindung in vorteilhafter Weise ausgestaltende Merkmale beinhalten die Unteransprüche.

Die mit der Erfindung hauptsächlich erzielten Vorteile sind darin zu sehen, dass durch die Anordnung einer Positioniereinrichtung in nicht zugänglichen Bereichen von zwei angrenzenden Aufbauteilen stets ein optisch ansprechender gleichbleibender Fugenverlauf sowie ein außenhautbündiger Übergang zwischen beiden Aufbauteilen gewährleistet ist.

Die Positioniereinrichtung weist einen einfachen Aufbau auf, ist kostengünstig herstellbar und umfasst lediglich ein durch ein Kunststoffspritzteil gebildetes Stützteil sowie Ausnehmungen an den beiden gleichgerichteten Flanschen.

Ein Ausführungsbeispiel der Erfindung ist in der Zeichnung näher erläutert. Es zeigt
- Fig. 1: eine perspektivische Teilansicht von schräg vorne auf den Bugbereich eines Kraftfahrzeuges,

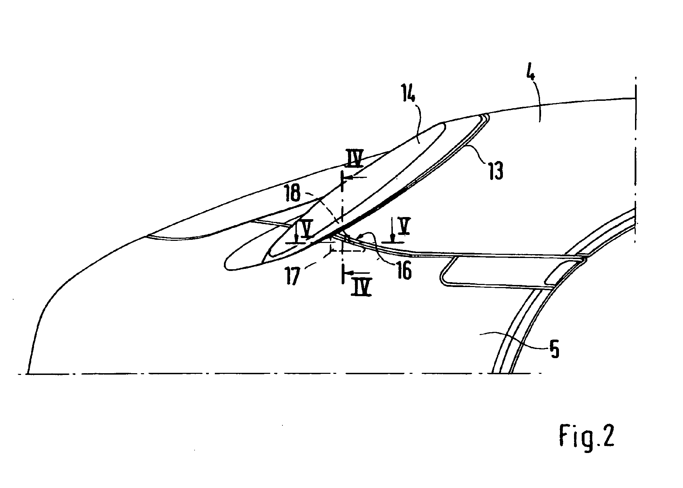

- Fig. 2: eine Teilseitenansicht auf die Fahrzeugkarosserie mit zwei angrenzenden Aufbauteilen,
- Fig. 3: eine Ansicht von innen auf beide Aufbauteile mit der zwischengeschalteten Positioniereinrichtung nach erfolgtem Einbau,
- Fig. 4: einen Schnitt nach der Linie IV-IV der Fig. 2 in größerer Darstellung,
- Fig. 5: einen Schnitt nach der Linie V-V der Fig. 2 in größerer Darstellung,
- Fig. 6: eine Ansicht von innen auf beide angrenzenden Aufbauteile und die Positioniereinrichtung,
- Fig. 7: eine Ansicht von innen auf beide Aufbauteile und die Positioniereinrichtung, wobei das zweite Aufbauteil eine vorgelagerte Montagestellung einnimmt.

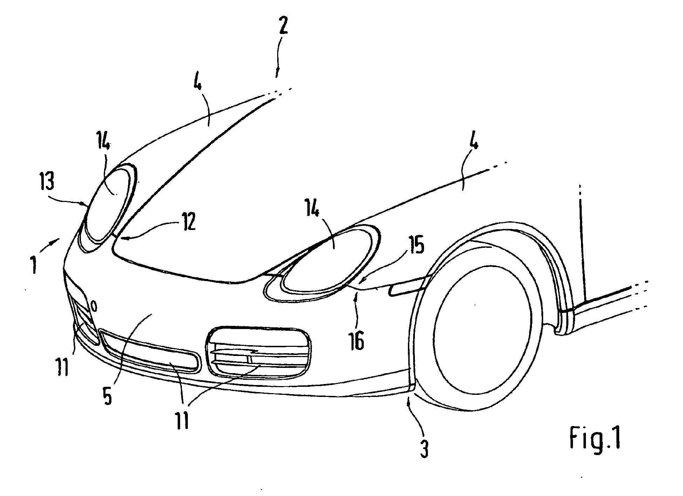

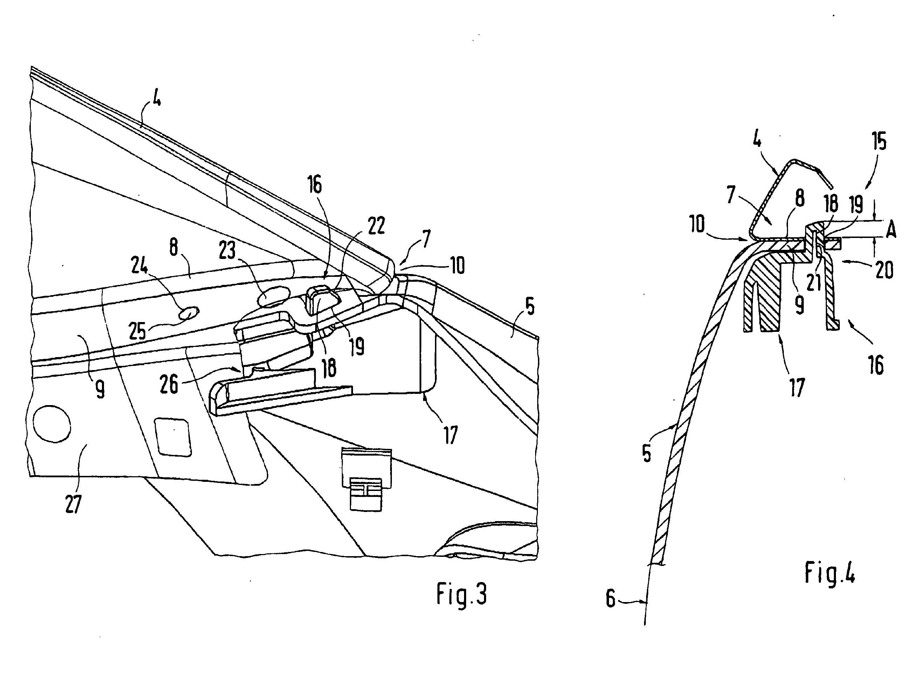

Fig. 1 zeigt den Bugbereich 1 eines Personenwagens 2, dessen Fahrzeugkarosserie 3 im dargestellten Bereich erste Aufbauteile 4 und ein zweites Aufbauteil 5 umfasst, die beide bereichsweise die Karosserieaußenhaut 6 bilden. Die Aufbauteile 4, 5 sind in gemeinsamen Verbindungsbereichen 7 an gleichgerichteten Flanschen 8, 9 aneinandergesetzt und in nicht näher dargestellter Weise lösbar miteinander verbunden (z.B. durch Schrauben, Nieten, Stecken oder dgl.). Der nach innen abgestellte Flansch 8 ist dem ersten Aufbauteil 4 und der andere Flansch 9 dem zweiten Aufbauteil 5 zugeordnet (Fig. 4). Zur Fahrzeugaußenseite hin begrenzen beide Aufbauteile 4, 5 im gemeinsamen Verbindungsbereich 7 eine Fuge 10.

Im Ausführungsbeispiel bilden die ersten Bauteile 4 jeweils einen vorderen Kotflügel, der aus Stahlblech, Alublech oder Kunststoff gefertigt ist. Das zweite Bauteil 5 wird im Ausführungsbeispiel durch ein großflächiges Bugendteil aus einem geeigneten elastischen Kunststoff gebildet, an dem örtlich Kühlluftöffnungen 11 vorgesehen sind. Das zweite Aufbauteil 5 (Bugendteil) wird von vorne und unten her an die ersten Aufbauteile 4 (Kotflügel) herangeführt und örtlich an diesen befestigt. In Übergangsbereichen 12 zwischen dem Bugendteil und den Kotflügeln sind Öffnungen 13 vorgesehen, in die vordere Scheinwerfer 14 eingesetzt sind.

In schwer zugänglichen befestigungslosen Bereichen 15 zwischen beiden Aufbauteilen 4, 5 z.B. benachbart den die Scheinwerfer 14 aufnehmenden Öffnungen 13, ist jeweils zwischen beiden angrenzenden Aufbauteilen 4, 5 eine Positioniereinrichtung 16 vorgesehen, die beide Aufbauteile 4, 5 in X- und Y-Richtung (Fahrzeuglängs- und Fahrzeugquerrichtung) lagerichtig zueinander festlegt.

Die Positioniereinrichtung 16 umfasst ein an einem Aufbauteil z.B. 5 vormontiertes Stützteil 17 mit einem angeformten, vorstehenden Fixierabschnitt 18, wobei jeder Fixierabschnitt 18 mit einer am Flansch 8 des anderen Bauteils 4 angeordneten Ausnehmung 19 formschlüssig zusammenwirkt. Im Ausführungsbeispiel ist das Stützteil 17 am untenliegenden zweiten Aufbauteil 5 befestigt. Das Stützteil 17 ist innenseitig in einem oberen Randbereich 20 des zweiten Aufbauteils 5 vorgesehen und zwar unmittelbar unterhalb des nach innen gerichteten Flansches 9. Der nach oben ragende Fixierabschnitt 18 ist durch eine Aussparung 21 des Flansches 9 hindurchgeführt und weist in Höhenrichtung gesehen eine solche Erstreckung auf, dass er auch noch den darüberliegenden Flansch 8 des ersten Bauteiles 4 nach oben hin überragt und gegenüber diesem um ein Maß A vorsteht (Fig. 4). Der nach oben ragende vorstehende Fixierabschnitt 18 ist im Ausführungsbeispiel quaderförmig ausgebildet und weist an seinem oberen Ende einen abgeschrägten Einführbereich 22 auf. Bei quaderförmiger Ausbildung des Fixierabschnittes 18 ist eine rechteckförmige Ausnehmung 19 vorgesehen. Der Fixierabschnitt 18 könnte auch zylindrisch ausgebildet sein, wobei die Ausnehmung 19 dann kreisförmig ausgebildet ist.

Die Vormontage des Stützteils 17 am zweiten Aufbauteil 5 erfolgt durch Schrauben, Nieten, Kleben oder dgl.. Im Ausführungsbeispiel ist eine Nietverbindung 23 zwischen dem Flansch 9 und dem darunterliegenden Stützteil 17 vorgesehen. Zur Verdrehsicherung des Stützteiles 17 ist an dessen Oberseite beabstandet zum Fixierabschnitt 18 noch ein nach oben ragender Zapfen 24 ausgebildet, der in eine Öffnung 25 des darüberliegenden Flansches 9 des zweiten Aufbauteils 5 eingreift (Fig. 3).

An der dem Aufbauteil 5 abgekehrten Seite des Stützteils 17 ist eine in der Draufsicht gesehen etwa V-förmige Aufnahme 26 ausgebildet, die einen vertikal ausgerichteten Flansch 27 des ersten Aufbauteils 4 umgreift. Der Flansch 27 bildet zusammen mit dem Flansch 8 eine stufenförmige Einprägung 28 des ersten Aufbauteils 4.

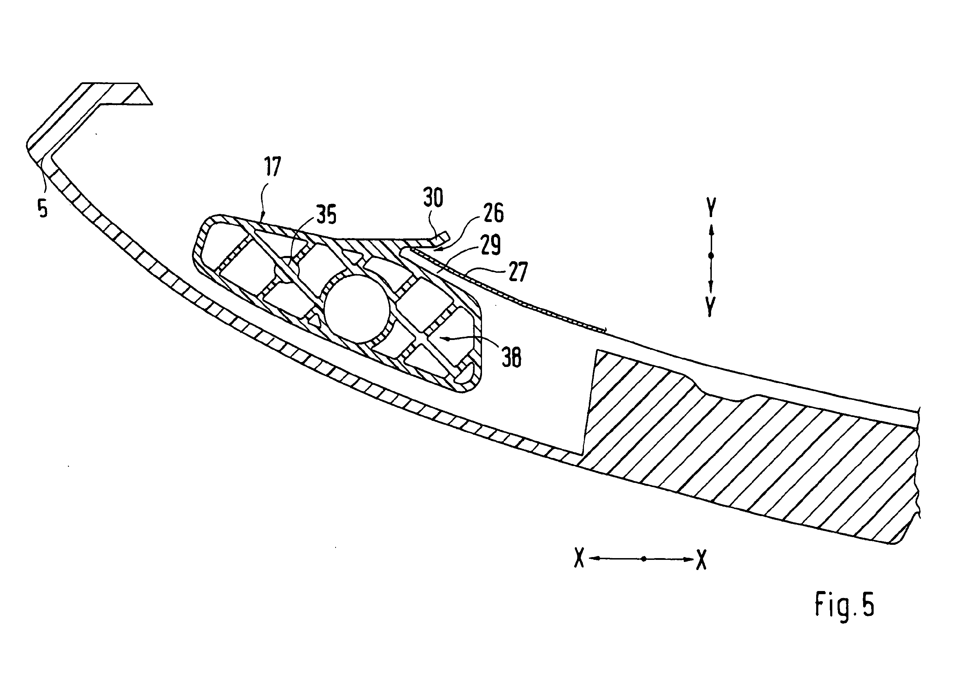

Die V-förmige Aufnahme 26 wird durch einen aufrechten Wandabschnitt 29 des Stützteils 17 und einen angeformten Arm 30 gebildet (Fig. 5). Durch das Zusammenwirken der Aufnahme 26 mit dem ersten Aufbauteil 4 wird verhindert, dass sich das zweite Aufbauteil 5 infolge starker Temperaturänderung oder von Vibrationen in Fahrzeugquerrichtung, das heißt vorzugsweise nach außen hin, bewegt.

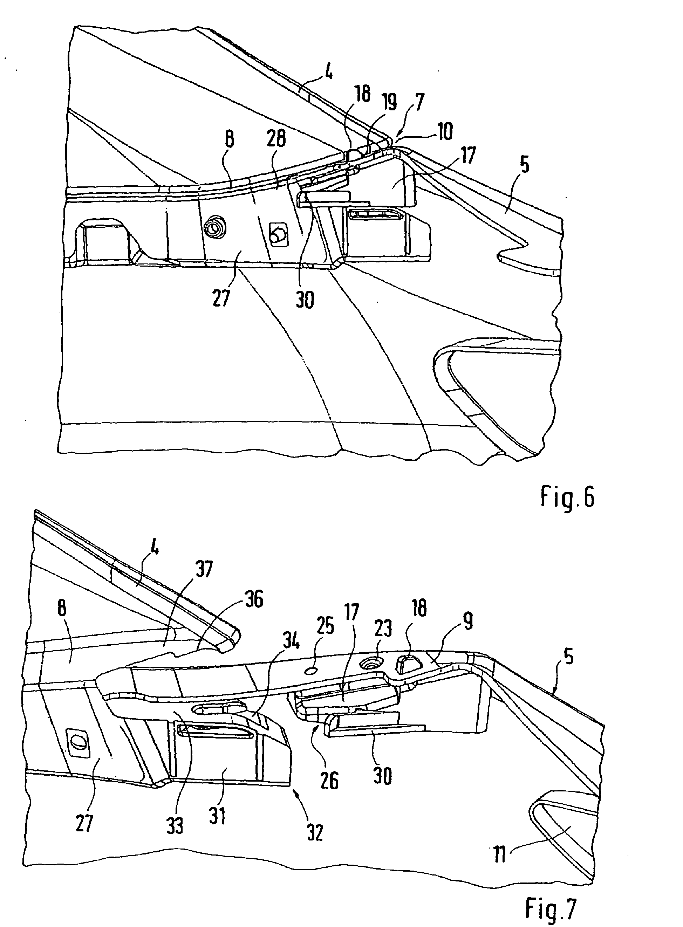

Zur Montageerleichterung des zweiten Aufbauteils 5 ist am ersten Aufbauteil 4 eine Halteleiste 31 angebracht, deren freies Ende 32 in Fahrzeuglängsrichtung vorsteht. An der Oberseite 33 der Halteleiste 28 ist eine versenkte trichterartige Führung 34 ausgebildet, in die ein nach unten ragender Führungszapfen 35 des Stützteils 17 eingreift (Fig. 7). Durch die trichterförmige Führung 34 zentriert sich das zweite Bauteil 5 bei der Montage in Fahrzeugquerrichtung und sorgt gleichzeitig dafür, dass der vorstehende Fixierabschnitt 18 in Kontakt mit der Ausnehmung 19 am darüberliegenden Flansch 8 des ersten Aufbauteils 4 gelangt. Das erste Aufbauteil 4 weist an seinem vorderen Ende einen Freischnitt 36 auf, das heißt, der vertikale Flansch 24 und ein Teilbereich des Flansches 8 enden bereits vor dem spitz zulaufenden Randbereich 37 des ersten Aufbauteils 4. Das Stützteil 17 wird durch ein Spritzgussteil aus Kunststoff gebildet und weist eine innere rippenförmige Versteifungsstruktur 38 auf.

## Patentansprüche

1. Fahrzeugkarosserie (3) mit zumindest einem ersten und einem zweiten, die Karosserieaußenhaut (6) bildenden Aufbauteil (4, 5), wobei die Aufbauteile (4, 5) im Bereich von gleichgerichteten Flanschen (8, 9) aneinandergesetzt und lösbar miteinander verbunden sind und zur Fahrzeugaußenseite hin im gemeinsamen Verbindungsbereich (7) eine Fuge (10) begrenzen, und dass in nicht zugänglichen Bereichen (15) zwischen beiden angrenzenden Aufbauteilen (4, 5) jeweils eine Positioniereinrichtung (16) vorgesehen ist, die beide Aufbauteile (4, 5) in X- und Y-Richtung zueinander festlegt, wobei die Positioniereinrichtung (16) ein an einem Aufbauteil z.B. (5) befestigtes, vormontiertes Stützteil (17) mit einem angeformten vorstehenden Fixierabschnitt (18) umfasst, der mit einer am Flansch (8) des anderen Bauteils (4) angeordneten Ausnehmung (19) formschlüssig zusammenwirkt, **dadurch gekennzeichnet, dass** an der Innenseite des Stützteils (17) eine in Einschubrichtung des zweiten Aufbauteils (5) gesehen offene V-förmige Aufnahme (26) ausgebildet ist, die mit einem vertikalen Flansch (27) des ersten Aufbauteils (4) zusammenwirkt.

2. Fahrzeugkarosserie nach Anspruch 1, **dadurch gekennzeichnet, dass** das Stützteil (17) am zweiten Aufbauteil (5) vormontiert ist, wogegen die Ausnehmungen (19) am Flansch (8) des ersten Aufbauteils (4) ausgebildet ist.

3. Fahrzeugkarosserie nach einem der vorangegangenen Ansprüche, **dadurch gekennzeichnet, dass** der Fixierabschnitt (18) quaderförmig, zylindrisch oder dgl. ausgebildet ist und an seiner Oberseite eine Einführschräge (22) aufweist.

4. Fahrzeugkarosserie nach einem der vorangegangenen Ansprüche, **dadurch gekennzeichnet, dass** das Stützteil (17) innenseitig am Aufbauteil (5) angeordnet ist und am darüberliegenden Flansch (9) des zweiten Aufbauteils (5) befestigt ist.

5. Fahrzeugkarosserie nach einem der vorangegangenen Ansprüche, **dadurch gekennzeichnet, dass** das Stützteil (17) durch Kleben, Nieten, Schrauben oder dgl. am zweiten Aufbauteil (5) in Lage gehalten ist.

6. Fahrzeugkarosserie nach einem der vorangegangenen Ansprüche, **dadurch gekennzeichnet, dass** zur Verdrehsicherung des Stützteils (17) an dessen Oberseite neben dem profilierten Fixierabschnitt (18) ein vorstehender Zapfen (24) vorgesehen ist, der in eine flanschseitige Öffnung (25) des zweiten Aufbauteils (5) eingreift.

7. Fahrzeugkarosserie nach einem der vorangegangenen Ansprüche, **dadurch gekennzeichnet, dass** das erste Aufbauteil (4) durch einen vorderen Kotflügel gebildet wird.

8. Fahrzeugkarosserie nach einem der vorangegangenen Ansprüche, **dadurch gekennzeichnet, dass** das zweite Aufbauteil (5) durch ein Bugendteil gebildet wird, dessen oberer Randbereich bereichsweise an den darüberliegenden Kotflügel angeschlossen ist.

9. Fahrzeugkarosserie nach einem der vorangegangenen Ansprüche, **dadurch gekennzeichnet, dass** an einem aufrechten Flansch (27) des ersten Bauteils (4) eine Halteleiste (31) befestigt ist, deren freies Ende (32) in Fahrzeuglängsrichtung gesehen vorsteht und dass an der Oberseite (33) der Halteleiste (32) eine trichterartige Führung (34) ausgebildet ist, in die ein nach unten ragender Führungszapfen (35) des Stützteiles (17) eingreift.

## Claims

1. Vehicle body (3) with at least one first and one second body part (4, 5) forming the outer skin (6) of the body, wherein the body parts (4, 5) are placed next to each other in the region of unidirectional flanges (8, 9) and connected releasably to each other, and delimit a joint (10) in the common connecting region (7) towards the outside of the vehicle, and wherein a respective positioning device (16) which fixes the two body parts (4, 5) in the X and Y directions with respect to each other is provided in inaccessible regions (15) between two adjacent body parts (4, 5), wherein the positioning device (16) comprises a preassembled supporting part (17) which is fastened to a body part, for example (5), and has an integrally formed, protruding fixing section (18) which interacts in a form-fitting manner with a recess (19) arranged on the flange (8) of the other component (4), **characterized in that** an open, V-shaped receptacle (26), as seen in the insertion direction of the second body part (5), is formed on the inside of the supporting part (17), said receptacle interacting with a vertical flange (27) of the first body part (4).

2. Vehicle body according to Claim 1, **characterized in that** the supporting part (17) is preassembled on the second body part (5) whereas the recess (19) is formed on the flange (8) of the first body part (4).

3. Vehicle body according to one of the preceding claims, **characterized in that** the fixing section (18) is designed to be square, cylindrical or the like and has an insertion slope (22) on the upper side thereof.

4. Vehicle body according to one of the preceding claims, **characterized in that** the supporting part (17) is arranged on the inside of the body part (5) and is fastened to the flange (9), which is located thereabove, of the second body part (5).

5. Vehicle body according to one of the preceding claims, **characterized in that** the supporting part (17) is held in position on the second body part (5) by adhesive bonding, riveting, screwing or the like.

6. Vehicle body according to one of the preceding claims, **characterized in that**, in order to secure the supporting part (17) against rotation, a protruding stud (24) is provided on the upper side thereof, next to the profiled fixing section (18), the protruding stud engaging in a flange-side opening (25) in the second body part (5).

7. Vehicle body according to one of the preceding claims, **characterized in that** the first body part (4) is formed by a front wing.

8. Vehicle body according to one of the preceding claims, **characterized in that** the second body part (5) is formed by a front end part, the upper border region of which is connected in regions to the wing located thereabove.

9. Vehicle body according to one of the preceding claims, **characterized in that** a retaining strip (31), the free end (32) of which protrudes, as seen in the longitudinal direction of the vehicle, is fastened to an upright flange (27) of the first component (4), and **in that** the upper side (33) of the retaining strip (32) is configured with a funnel-like guide (34) in which a downwardly protruding guide stud (35) of the supporting part (17) engages.

## Revendications

1. Carrosserie de véhicule (3) avec au moins une première et une deuxième partie de structure (4, 5) formant la peau extérieure de la carrosserie (6), les parties de structure (4, 5) étant reliées entre elles de façon accolée et amovible dans la zone des flancs (8, 9) de même orientation et délimitant un joint (10) dans la zone de jonction commune (7) en direction du côté extérieur du véhicule et un dispositif de positionnement (16) étant respectivement prévu dans les zones (15) non accessibles entre deux parties de structure (4, 5) connexes, lesdites deux parties de structure (4, 5) étant fixées l'une à l'autre dans la direction X et Y, le dispositif de positionnement (16) comprenant une partie d'appui (17) prémontée fixée à une partie de structure (5) par exemple dotée d'un segment de fixation (18) saillant moulé, ledit segment interagissant par complémentarité de formes avec un évidement (19) disposé au niveau du flanc (8) de l'autre composant (4), **caractérisée en ce qu'**au niveau du côté intérieur de la partie d'appui (17), un logement (26) ouvert en V avec lequel un flanc vertical (27) de la première partie de structure (4) interagit est réalisé dans la direction de poussée de la deuxième partie de structure (5).

2. Carrosserie de véhicule selon la revendication 1, **caractérisée en ce que** la partie d'appui (17) est prémontée au niveau de la deuxième partie de structure (5), les évidements (19) étant quant à eux réalisés au niveau du flanc (8) de la première partie de structure (4).

3. Carrosserie de véhicule selon l'une quelconque des revendications précédentes, **caractérisée en ce que** le segment de fixation (18) est carré, cylindrique ou leur équivalent et comporte une pente d'introduction (22) au niveau de son côté supérieur.

4. Carrosserie de véhicule selon l'une quelconque des revendications précédentes, **caractérisée en ce que** la partie d'appui (17) est disposée côté intérieur au niveau de la partie de structure (5) et est fixée au niveau du flanc (9) opposé de la deuxième partie de structure (5).

5. Carrosserie de véhicule selon l'une quelconque des revendications précédentes, **caractérisée en ce que** la partie d'appui (17) est maintenue en place au niveau de la deuxième partie de structure (5) par collage, rivetage, vissage ou leur équivalent.

6. Carrosserie de véhicule selon l'une quelconque des revendications précédentes, **caractérisée en ce qu'**un tenon (24) saillant est prévu pour fixer sans rotation la partie d'appui (17) à son côté supérieur à côté du segment de fixation (18) profilé s'engrenant dans une ouverture (25) de type flanc de la deuxième partie de structure (5).

7. Carrosserie de véhicule selon l'une quelconque des revendications précédentes, **caractérisée en ce que** la première partie de structure (4) est formée par une aile avant.

8. Carrosserie de véhicule selon l'une quelconque des revendications précédentes, **caractérisée en ce que** la deuxième partie de structure (5) est formée par une partie d'extrémité de partie avant dont la zone de bordure supérieure est partiellement raccordée à l'aile supérieure.

9. Carrosserie de véhicule selon l'une quelconque des revendications précédentes, **caractérisée en ce qu'**une baguette d'arrêt (31) est fixée à un flanc (27) droit du premier composant (4), l'extrémité libre (32) de ladite baguette saillant dans la direction longitudinale du véhicule et qu'un guide (34) en forme d'auge est réalisé au niveau du côté supérieur (33) de la baguette d'arrêt (32) dans lequel s'engrène un tenon de guidage (35) saillant vers le bas de la partie d'appui (17).
